# DEMANDE DE BREVET EUROPEEN

(11) **EP 1 074 714 A1**
(43) Date de publication de la demande: **07.02.2001**
(21) Numéro de dépôt: 00402157.2
(22) Date de dépôt: 27.07.2000
(51) Int. Cl.: F02D 23/02, F02D 41/40, F02D 41/10, F02B 37/20

(54) **Moteur turbocompressé perfectionné**

(30) Priorité: 06.08.1999 FR 9910229
(71) Demandeur: Renault, 92100 Boulogne Billancourt (FR)
(72) Inventeur: Cornet, Pierrick, 91150 Morigny Champigny (FR)

(57) **Abrégé**

L'invention concerne un moteur (10) à combustion interne comportant au moins un injecteur (28) de carburant commandé par un module (30) électronique d'injection, en réponse à l'actionnement d'une pédale (32) d'accélérateur, pour injecter du carburant directement dans une chambre (18) de combustion associée du moteur (10) lors d'une phase d'admission appartenant au cycle de fonctionnement du moteur (10), un moyen (26) d'obturation de la chambre de combustion (18) pour les gaz (G) d'échappement du moteur, du type qui comporte au moins un turbocompresseur (36) dont une turbine (38), alimentée en gaz (G) d'échappement entraîne un compresseur (40) pour comprimer de l'air (A) d'admission, caractérisé en ce que le module (30) électronique d'injection est susceptible de mettre en oeuvre une étape d'injection (I) à l'échappement au cours de laquelle, lors de la phase d'évacuation, il commande l'injecteur (28) de façon à injecter du carburant dans la chambre de combustion afin d'accélérer la turbine (38) du turbocompresseur (36) pour favoriser la compression de l'air (A) d'admission.

## Description

L'invention concerne un moteur de véhicule automobile à combustion interne.

L'invention concerne plus particulièrement un moteur de véhicule automobile à combustion interne, du type qui comporte au moins un injecteur de carburant qui est commandé par un module électronique d'injection, en réponse à au moins l'actionnement d'une pédale d'accélérateur du véhicule, pour injecter du carburant directement dans une chambre de combustion associée du moteur lors d'une phase d'admission appartenant au cycle de fonctionnement du moteur, des moyens d'admission d'air à l'intérieur de la chambre de combustion, et un moyen d'obturation de la chambre de combustion qui est mobile entre une position active fermée et une position inactive ouverte dans laquelle il permet l'évacuation des gaz d'échappement du moteur lors d'une phase d'évacuation appartenant au cycle de fonctionnement du moteur, du type qui comporte au moins un turbocompresseur dont une turbine, alimentée en gaz d'échappement par la chambre de combustion, entraîne un compresseur destiné à comprimer de l'air d'admission alimentant les moyens d'admission d'air du moteur.

On connaît de nombreux exemples moteurs de ce type.

Il s'agit pour la plupart de moteurs fonctionnant selon un cycle à deux temps ou à quatre temps, du type à injection directe, qui comportent un système d'injection dont un module électronique d'injection contrôle le fonctionnement des injecteurs. Les injecteurs sont généralement des injecteurs électromagnétiques qui sont alimentés sous pression, notamment par l'intermédiaire d'une rampe d'injection appelée "common rail" et qui comportent chacun une aiguille commandée électromagnétiquement dont la levée permet le passage et l'injection du carburant. Le module électronique d'injection assure le contrôle des levées d'aiguilles des injecteurs en fonction de la position de la pédale d'accélérateur qui est actionnée par le conducteur du véhicule et en fonction de différents paramètres de fonctionnement du moteur.

En particulier, le module électronique d'injection commande l'injection de carburant lors de chaque phase d'admission du cycle de fonctionnement du moteur. Le mélange formé dans la chambre de combustion est ensuite comprimé lors d'une phase de compression, puis enflammé, et il repousse un élément lié à un arbre de sortie du moteur, notamment un piston dans le cas d'un moteur alternatif, ou un rotor dans le cas d'un moteur rotatif. Puis les gaz brûlés qui résultent de la combustion du mélange sont évacués hors de la chambre de combustion en ouvrant un moyen d'obturation, notamment une soupape d'échappement dans le cas d'un moteur fonctionnant selon un cycle à quatre temps, ou une lumière dans le cas d'un moteur fonctionnant selon un cycle à quatre temps.

Certains moteurs de ce type comportent un turbocompresseur dont une turbine, qui est alimentée en gaz brûlés d'échappement par la chambre de combustion, entraîne un compresseur qui destiné à comprimer l'air d'admission nécessaire à la constitution du mélange carburé alimentant le moteur.

Lorsque le conducteur du véhicule commande une forte accélération du véhicule, l'injection d'une quantité massive de carburant provoque une accélération du régime du moteur et il s'ensuit par conséquent une accélération du débit et une élévation de la température des gaz d'échappement qui sont évacués hors de la chambre de combustion et qui alimentent au moins pour partie la turbine du turbocompresseur. Le compresseur du turbocompresseur, entraîné par la turbine, comprime alors l'air d'admission.

On a constaté qu'il existait un temps de réaction important entre le moment où les gaz d'échappement chauds et accélérés parviennent à la turbine et le moment où ceux-ci parviennent à vaincre l'inertie de celle-ci suffisamment pour que le compresseur comprime l'air d'admission dans une proportion suffisante pour améliorer les performances du moteur. Ce temps de réaction, appelé couramment "temps de réaction du turbocompresseur" est essentiellement fonction de la température des gaz d'échappement.

Pour remédier à ces inconvénients, et minimiser ce temps de réaction, on a proposé d'utiliser des turbocompresseurs de type "twin scroll" qui comportent des moyens de détection de la bouffée de gaz d'échappements chauds produite par l'accélération afin de déclencher de manière anticipée le fonctionnement du compresseur.

On a aussi proposé de modifier le calage des arbres à cames du moteur de façon à optimiser le débit de gaz d'échappement chauds alimentant la turbine du turbocompresseur.

Toutefois, ces conceptions présentent l'inconvénient majeur d'entraîner un surcoût de fabrication du moteur.

Pour remédier à cet inconvénient, l'invention propose un moteur du type décrit précédemment, qui permet, lors d'une accélération, d'élever sensiblement la température des gaz d'échappement pour lancer le compresseur du turbocompresseur avec un temps de réaction réduit.

Dans ce but, l'invention propose un moteur du type décrit précédemment, caractérisé en ce que le module électronique d'injection est susceptible de mettre en oeuvre une étape d'injection à l'échappement au cours de laquelle, lors de la phase d'évacuation, il commande l'injecteur de façon à injecter du carburant dans la chambre de combustion afin d'accélérer la turbine du turbocompresseur pour favoriser la compression de l'air d'admission.

Selon d'autres caractéristiques de l'invention :
- le module électronique d'injection est susceptible commander le fonctionnement de l'injecteur en fonction d'au moins une valeur de la position de la pédale d'accélérateur, une valeur de la pression réelle de l'air d'admission, et une valeur du régime du moteur,
- le module électronique convertit la valeur de la position de la pédale d'accélérateur en une valeur de la pression demandée de l'air d'admission,
- si la valeur de la pression demandée de l'air d'admission est inférieure à la valeur de la pression réelle de l'air d'admission, le module électronique commande l'injecteur pour injecter du carburant seulement lors de la phase d'admission,
- si la valeur de la pression demandée de l'air d'admission est supérieure ou égale à la valeur de la pression réelle de l'air d'admission et si la valeur du régime du moteur est supérieure à un seuil de régime déterminé, le module électronique commande l'injecteur pour injecter du carburant seulement lors de la phase d'admission,
- si la valeur de la pression demandée de l'air d'admission est supérieure ou égale à la valeur de la pression réelle de l'air d'admission et si la valeur du régime du moteur est inférieure à un seuil de régime déterminé, le module électronique commande l'injecteur pour injecter du carburant lors de la phase d'admission et lors de la phase d'évacuation,
- le moteur est du type à allumage commandé et comporte au moins une bougie d'allumage qui est destinée à enflammer le carburant dans la chambre de combustion lors de la phase d'admission et/ou lors de la phase d'évacuation.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe d'un moteur à injection directe comportant un turbocompresseur représenté lors de la phase d'évacuation pendant laquelle le module électronique d'injection commande le fonctionnement de l'injecteur ;
- les figures 2A, 2B, 2C, et 2D sont une série de quatre diagrammes en correspondance représentant respectivement la position de la pédale d'accélérateur, le régime du moteur, la température de l'échappement, et la pression d'admission d'air en fonction du temps lors d'une accélération dans le cadre d'un moteur conforme à l'état de la technique ;
- les figures 3A, 3B, 3C, et 3D sont une série de quatre diagrammes selon les figures 2A, 2B, 2C, et 2D dans le cadre d'un moteur conforme à l'invention ;
- la figure 3E est un diagramme en correspondance des figures 3A, 3B, 3C, et 3D illustrant le fonctionnement de l'injection à l'échappement ; et
- la figure 4 est un organigramme décrivant le fonctionnement d'un module électronique d'injection conforme à l'invention.

Dans la description qui va suivre, des lettres ou chiffres de référence identiques désignent des éléments identiques ou présentant des caractéristiques similaires.

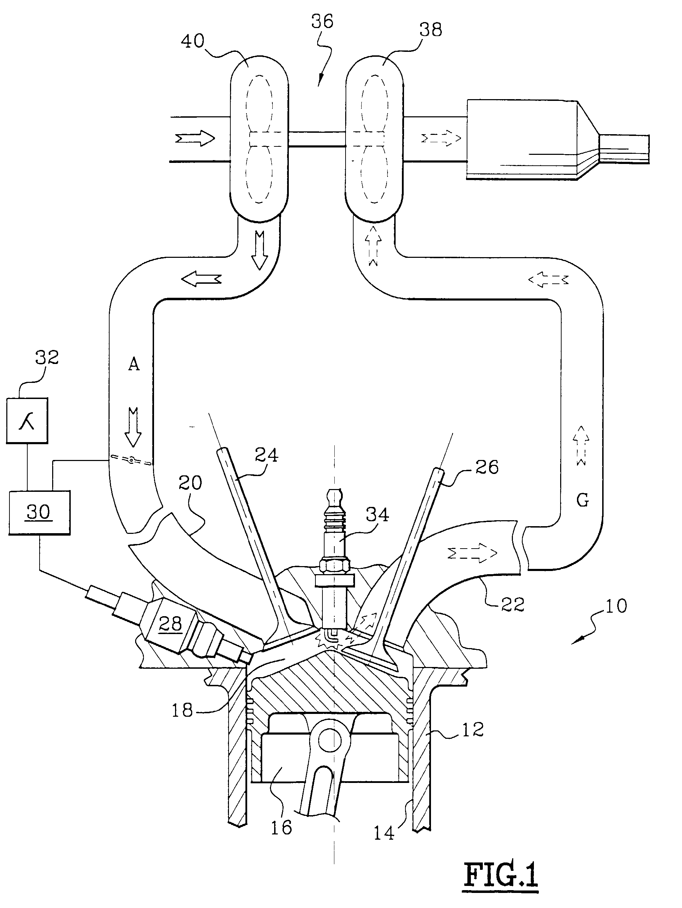

On a représenté à la figure 1 un moteur 10 mettant en oeuvre l'invention, notamment un moteur alternatif monocylindre fonctionnant suivant un cycle à quatre temps.

Cette disposition n'est pas limitative de l'invention et l'invention trouve à s'appliquer pour tout type de moteur à combustion interne, qu'il soit un alternatif ou rotatif et/ou un moteur fonctionnant suivant un cycle à deux ou quatre temps.

De manière connue, le moteur 10 comporte un bloc moteur 12 à l'intérieur duquel est agencé un cylindre 14 qui reçoit en coulissement un piston 16 relié par une bielle à un vilebrequin (non représenté) qui est un arbre de sortie du moteur 10.

Le cylindre 14, le piston 16, et la culasse du bloc moteur 12 délimitent une chambre 18 de combustion qui comporte un conduit 20 d'admission de l'air A et un conduit 22 d'évacuation des gaz G d'échappement, qui circulent dans ces conduits comme représenté par les flèches.

Le conduit 20 d'admission de l'air A est susceptible d'être obturé par une soupape d'admission 24 et le conduit 22 d'évacuation des gaz d'échappements G est susceptible d'être obturé par une soupape d'échappement 26.

La chambre de combustion 18 est susceptible d'être alimentée en carburant par un injecteur 28 qui appartient à un système d'injection directe haute pression (non représenté). En particulier, l'injecteur 28 est susceptible d'injecter du carburant sous une très forte pression, par exemple supérieure ou égale à 400 bars.

Le fonctionnement de l'injecteur 28 est commandé par un module électronique d'injection 30 en réponse à l'actionnement, par le conducteur du véhicule, d'une pédale d'accélérateur 32. Le mélange constitué du carburant et de l'air s'effectue directement dans la chambre de combustion 18 puis est enflammé par une bougie 34 d'allumage.

Le moteur 10 comporte un turbocompresseur 36, dont une turbine 38 est agencé en aval du conduit 22 d'évacuation des gaz G d'échappement, et dont un compresseur 40 est agencé en amont du conduit 20 du conduit d'admission de l'air A. La turbine 38 est liée en rotation au compresseur 40 qui est susceptible de comprimer l'air A d'admission.

Selon un fonctionnement conventionnel d'un tel moteur thermique, le module 30 électronique d'injection commande le fonctionnement de l'injecteur 28 seulement lors d'une phase d'admission (non représentée) appartenant au cycle de fonctionnement du moteur.

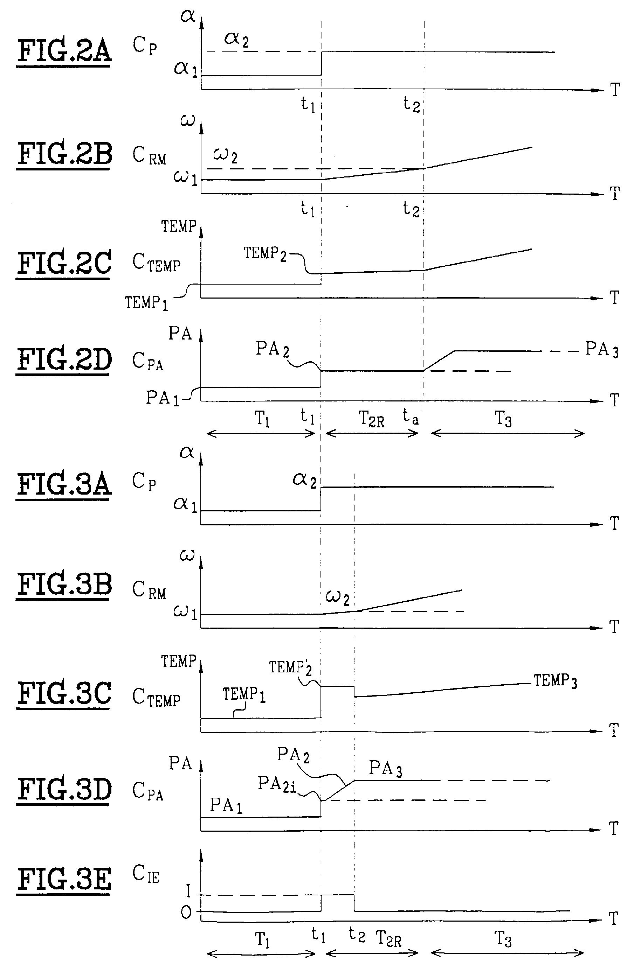

La figure 2 illustre ce fonctionnement conventionnel.

L'accélération se déroule au cours du temps T suivant globalement trois périodes.

Une première période T₁, qui se déroule d'un instant de référence 0 jusqu'à un instant t₁, au cours de laquelle aucune accélération n'est demandée par le conducteur du véhicule, puis une deuxième période T_{2R} correspondant au temps de réaction du turbocompresseur 36, et une troisième période T₃, postérieure à l'instant t₂, au cours de laquelle le compresseur 40 du turbocompresseur 36 comprime efficacement l'air d'admission A avant son introduction dans la chambre de combustion 18.

Le diagramme C_{P} de la figure 2A représente la position de la pédale 32 d'accélérateur en fonction du temps T écoulé, le diagramme C_{RM} de la figure 2B représente le régime du moteur 10 en fonction du temps T écoulé, le diagramme C_{TEMP} de la figure 2C représente la température des gaz G d'échappement en fonction du temps T écoulé, et le diagramme C_{PA} de la figure 2D représente la pression de l'air d'admission A en fonction du temps T écoulé.

Ainsi, comme illustre la figure 2, pendant la période T₁, c'est-à-dire jusqu'à l'instant t₁ auquel le conducteur du véhicule actionne la pédale 32 d'accélérateur pour provoquer une accélération, celle-ci occupe une position α₁ qui correspond un fonctionnement du moteur 10 sans demande d'accélération. C'est le cas d'un fonctionnement dans lequel une pression continue du pied du conducteur sur la pédale a pour effet de maintenir un régime régulier du moteur.

Le moteur 10 fonctionne suivant un régime ω₁ peu élevé. La température TEMP₁ des gaz G d'échappement est une température de bas régime de ceux-ci. La pression PA₁ de l'air d'admission est inférieure à la pression atmosphérique et constitue donc une dépression dans le conduit 20 d'admission du moteur 10.

Au delà de l'instant t₁, la pédale 32 d'accélérateur occupe une position angulaire α₂ d'accélération qui commande au module 30 électronique d'injection d'injecter de grandes quantités de carburant lors de chaque phase d'admission du cycle de fonctionnement du moteur 10. Cette position α₂ correspond par exemple à un enfoncement brusque de la pédale 32 d'accélérateur lors d'un dépassement.

Cette injection massive de carburant se traduit, après l'instant t₁, sur le diagramme C_{RM}, par une augmentation du régime du moteur 10 qui passe de la valeur ω₁ à une valeur ω₂, sur le diagramme C_{TEMP} par une augmentation de la température des gaz G d'échappements qui passent de la température TEMP₁ à une température TEMP₂ plus élevée, et sur le diagramme C_{PA} par une augmentation de la pression de l'air A d'admission fourni par le compresseur 40 du turbocompresseur 36 à la chambre 18 de combustion qui passe de la valeur PA₁ à une valeur PA₂.

Toutefois, comme illustre la figure 2D, la valeur de la pression PA₂ de l'air d'admission A demeure peu élevée par rapport à la valeur de la pression PA₁ précédente tant que l'on n'est pas parvenu à un instant t₂ déterminé, qui correspond au lancement du compresseur 40 du turbocompresseur 36.

En effet, l'intervalle de temps T_{2R} compris entre l'instant t₁ et l'instant t₂, aussi appelé temps de réaction du turbocompresseur 36, correspond à un intervalle de temps pendant lequel le compresseur 40 du turbocompresseur 36 est insuffisamment lancé par la turbine 38 pour comprimer efficacement les gaz d'admission A.

La température TEMP₂ des gaz G d'échappement est insuffisante pour lancer suffisamment la turbine 38, et donc pour entraîner à une vitesse suffisante le compresseur 40. De la sorte, la valeur de la pression PA₂, qui est pourtant supérieure à la valeur de pression PA₁ initiale est similaire à celle que l'on pourrait rencontrer sur un moteur atmosphérique dépourvu de turbocompresseur 36.

A l'issue de cette période T_{2R}, c'est à dire après l'instant t₂, la température TEMP des gaz G d'échappements croit suffisamment pour entraîner la turbine 38 du turbocompresseur 36, ce qui a pour effet de lancer le compresseur 40. Lorsque le compresseur 40 du turbocompresseur 36 est suffisamment lancé, il est susceptible de comprimer suffisamment l'air A d'admission de façon à augmenter significativement la pression PA de l'air d'admission, qui croit jusqu'à une valeur PA₃ de l'air d'alimentation, et par conséquent d'augmenter rapidement le régime ω de rotation du moteur 10. Comme représenté sur le diagramme C_{RM}, le régime ω de rotation du moteur 10 croit donc rapidement, après l'instant t₂ à partir de la valeur ω₂.

Conformément à l'invention, le module 30 électronique d'injection est susceptible de mettre en oeuvre une étape d'injection à l'échappement, au cours de laquelle, lors de la phase d'évacuation qui est représentée à la figure 1, il commande l'injecteur 28 de façon à injecter du carburant dans la chambre de combustion 18 afin d'accélérer la turbine 38 du turbocompresseur 36 pour favoriser la compression de l'air A d'admission.

L'injection de carburant à l'échappement est représentée sur le diagramme C_{IE} par un état inactif "O" de l'injecteur 28 lors de l'échappement ou au contraire par un état actif "I" de cet injecteur 28 lors de l'échappement dans lequel il injecte du carburant dans la chambre de combustion 18.

Comme l'illustre la figure 3, le fonctionnement du moteur 10 est analogue au fonctionnement d'un moteur conventionnel jusqu'à l'instant t₁. En revanche, après l'instant t₁, l'injection I de carburant lors d'une phase d'évacuation des gaz brûlés G par l'injecteur 28, et l'allumage du mélange obtenu par la bougie 34 provoque, comme illustré sur le diagramme C_{TEMP}, une élévation supplémentaire de la température TEMP des gaz G d'échappement, qui passent brutalement de la température initiale TEMP₁ à une température TEMP₂' beaucoup plus élevée que la température TEMP₂ décrite précédemment. Dans le cas du moteur représenté à la figure 1, cette injection I s'effectue lorsque la soupape 26 d'échappement est ouverte. La forte pression de carburant, qui est obtenue naturellement en sortie de l'injecteur 28 du circuit d'injection directe, propulse une bouffée de gaz incandescents dans le conduit 22 d'évacuation des gaz G d'échappement.

À titre d'exemple, la température TEMP₂ des gaz d'échappement G peut être jusqu'à 100 ou 200°C supérieure à la température TEMP₂ précédemment décrite. Ceci a pour effet un entraînement beaucoup plus rapide de la turbine 38, du compresseur 40, et de ce fait une augmentation quasi-immédiate de la pression PA d'admission d'air qui passe rapidement de la dépression PA₁ de fonctionnement du moteur 10 à bas régime à la pression PA₃ de suralimentation. En effet, du fait du lancement rapide du compresseur 40 du turbocompresseur 36, la pression de l'air d'admission PA₂ ne suit plus un palier équivalent à une pression de fonctionnement atmosphérique du moteur, mais elle croit rapidement jusqu'à la pression PA₃ pour laquelle le compresseur 40 du turbocompresseur 36 comprime efficacement l'air A d'admission.

De la sorte, le régime ω du moteur 10 croit à partir du régime ω₁ suivant un intervalle de temps T_{2R}, correspondant à l'intervalle de temps compris entre t₁ et t₂ appelé temps de réaction du turbocompresseur 36, qui est considérablement plus réduit que dans le cas d'un moteur 10 conventionnel.

Il convient de noter qu'après l'instant t₂ la température TEMP des gaz G d'échappement diminue sensiblement, l'énergie calorifique contenue dans les gaz d'échappement G jusqu'à l'instant t₂ ayant été consommée par la turbine 38 du turbocompresseur 40 pour lancer le compresseur 40.

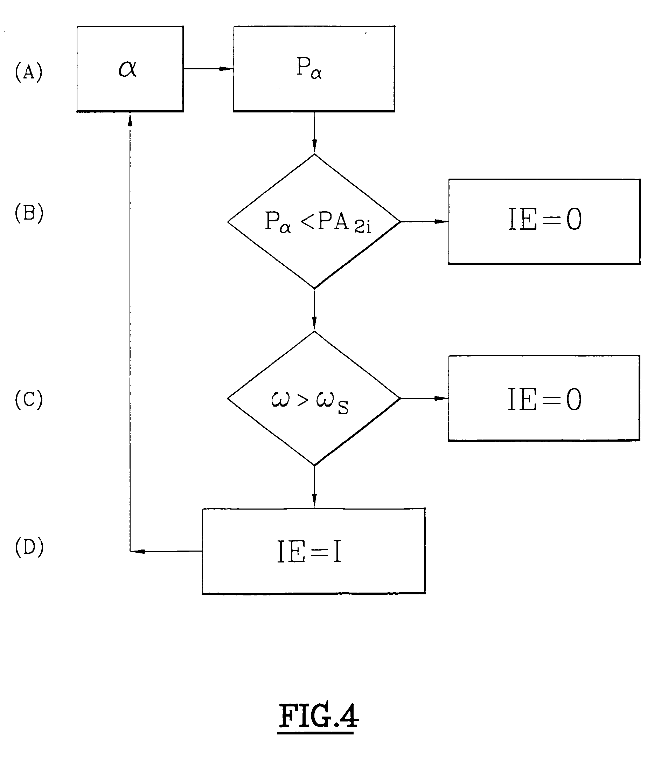

La figure 4 illustre le fonctionnement du module 30 électronique d'injection qui commande le fonctionnement de l'injecteur 28.

Lors d'une première étape A, le module électronique 30 d'injection convertit la position α de la pédale d'accélérateur 32 en une pression d'admission équivalente P_{α} théorique à obtenir dans le conduit 20 d'admission de l'air A. Dans une deuxième étape B, le module électronique 30 d'injection compare cette pression d'admission équivalente P_{α} théorique à une valeur initiale PA₂ᵢ de la pression de l'air d'admission. Cette pression d'admission correspond à la pression lors du début de compression de l'air A d'admission par le compresseur 40 et est notamment représentée sur la courbe C_{PA} de la figure 2. Si la pression d'admission équivalente P_{α} est inférieure à la pression PA₂ᵢ de l'air d'admission, cela signifie que la pression PA₂ᵢ réelle de l'air d'admission est suffisante au regard de la pression le module électronique 30 ne détermine pression d'admission équivalente P_{α} demandée par le conducteur, et dans ce cas II détermine un état O "inactif" de l'injection IE à l'échappement.

Dans le cas contraire, cela signifie que le conducteur demande une certaine accélération au véhicule, et le module 30 électronique d'injection vérifie alors dans une étape C que cette accélération demandée peut être obtenue. Pour ce faire, il compare le régime ω du moteur à un régime ωₛ de seuil caractérisant le fonctionnement efficace du compresseur 40. Si le régime ω est supérieur au régime ωₛ de seuil, le module 30 électronique d'injection détermine que le compresseur 40 et que l'injection IE à l'échappement doit prendre la valeur "O" inactive puisqu'elle est superflue.

Dans le cas contraire, dans une étape D, le module 30 électronique d'injection commande l'injection à l'échappement IE de façon que l'injecteur 28 soit actif, ce qui est représenté par la valeur "I"

Ainsi, l'invention permet de réduire notablement le temps de réaction T_{2R} du turbocompresseur, ce qui permet de disposer d'un moteur réagissant très rapidement aux sollicitations du conducteur, notamment en cas de conduite sportive.

## Revendications

1. Moteur (10) de véhicule automobile à combustion interne, du type qui comporte au moins un injecteur (28) de carburant qui est commandé par un module (30) électronique d'injection, en réponse à au moins l'actionnement d'une pédale (32) d'accélérateur du véhicule, pour injecter du carburant directement dans une chambre (18) de combustion associée du moteur (10) lors d'une phase d'admission appartenant au cycle de fonctionnement du moteur (10), des moyens (24) d'admission d'air à l'intérieur de la chambre (18) de combustion, et un moyen (26) d'obturation de la chambre de combustion (18) qui est mobile entre une position active fermée et une position inactive ouverte dans laquelle il permet l'évacuation des gaz (G) d'échappement du moteur lors d'une phase d'évacuation appartenant au cycle de fonctionnement du moteur, du type qui comporte au moins un turbocompresseur (36) dont une turbine (38), alimentée en gaz (G) d'échappement par la chambre de combustion (18), entraîne un compresseur (40) destiné à comprimer de l'air (A) d'admission alimentant les moyens d'admission d'air (24)du moteur,
caractérisé en ce que le module (30) électronique d'injection est susceptible de mettre en oeuvre une étape d'injection (I) à l'échappement au cours de laquelle, lors de la phase d'évacuation, il commande l'injecteur (28) de façon à injecter du carburant dans la chambre de combustion afin d'accélérer la turbine (38) du turbocompresseur (36) pour favoriser la compression de l'air (A) d'admission.

2. Moteur (10) selon la revendication précédente, caractérisé en ce que le module (30) électronique d'injection est susceptible commander le fonctionnement (I) de l'injecteur (28) en fonction d'au moins une valeur (α) de la position de la pédale (32) d'accélérateur, une valeur de la pression (PA₂ᵢ) réelle de l'air (A) d'admission, et une valeur (ω) du régime du moteur.

3. Moteur (10) selon la revendication précédente, caractérisée en ce que le module électronique convertit la valeur de la position (α) de la pédale (32) d'accélérateur en une valeur (P_{α}) de la pression demandée de l'air (A) d'admission.

4. Moteur (10) selon la revendication précédente, caractérisé en ce que, si la valeur (P_{α}) de la pression demandée de l'air d'admission est inférieure à la valeur (PA₂ᵢ) de la pression réelle de l'air (A) d'admission, le module électronique (30) commande l'injecteur (28) pour injecter du carburant seulement lors de la phase d'admission.

5. Moteur (10) selon la revendication précédente, caractérisé en ce que si la valeur (P_{α}) de la pression demandée de l'air d'admission est supérieure ou égale à la valeur (PA₂ᵢ) de la pression réelle de l'air (A) d'admission et si la valeur (ω) du régime du moteur est supérieure à un seuil (ωₛ) de régime déterminé, le module électronique (30) commande l'injecteur (28) pour injecter du carburant seulement lors de la phase d'admission.

6. Moteur (10) selon la revendication 4, caractérisé en ce que, si la valeur (P_{α} ) de la pression demandée de l'air d'admission est supérieure ou égale à la valeur (PA₂ᵢ) de la pression réelle de l'air d'admission et si la valeur (ω) du régime du moteur est inférieure à un seuil (ωₛ) de régime déterminé, le module électronique (30) commande l'injecteur (28) pour injecter du carburant lors de la phase d'admission et lors de la phase d'évacuation.

7. Moteur (10) selon l'une quelconque des revendications précédentes, caractérisé en ce que le moteur est du type à allumage commandé et comporte au moins une bougie d'allumage (34) qui est destinée à enflammer le carburant dans la chambre (18) de combustion lors de la phase d'admission et/ou lors de la phase d'évacuation.
